# EUROPEAN PATENT APPLICATION

(11) **EP 1 708 126 A1**
(43) Date of publication of application: **04.10.2006**
(21) Application number: 05290730.0
(22) Date of filing: 31.03.2005
(51) Int. Cl.: G06K 19/07

(54) **A personal USB microprocessor token with enhanced internal clock**

(71) Applicant: Axalto S.A., 92120 Montrouge (FR)
(72) Inventor: Barbe, Serge, 50 avenue Jean-Jaurès, 92120 Montrouge (FR)
(74) Representative: Jacquot, Ludovic R. G.

(57) **Abstract**

The invention relates to a personal token such as an Integrated Circuit Card, comprising a microprocessor (11), a communication port for data exchanges between the microprocessor and an external device (13), and an oscillator (14) for pacing exchanges of data through said port between the microprocessor and said external device, characterized in that the oscillator pacing the exchanges on said port also paces the internal processing work of the microprocessor (11).

## Description

The present invention relates to an internal reference clock for a personal portable token. Such internal clock may be required for example under particular communication protocols such as Universal Serial Bus ("USB") communication protocol.

More particularly, the invention relates to generating a reference clock making use of an oscillator which is internal to the card and metered by downstream received reference signal.

USB devices need an accurate clock for reasons described hereafter. When a host or hub sends downstream data to a USB device there is a need at the device end to sample this data stream to recognize the logical states of the data, i.e. the "1's" and the "0's".

For the sample to occur periodically at the proper pace, the sampling clock must have a frequency similar to the one timing the downstream traffic in the host or hub.

Likewise, when the device sends upstream data to the bus, there is a need, at the host or hub end, to sample this data stream to recognize the the "1's" and the "0's". For the sample to occur periodically at the proper pace, the sampling clock must have a frequency similar to the one timing the upstream traffic in the device.

In some prior art, the host or hub and the device clock frequencies are similar since both the device and the host or hub have clocks based on quartz crystal or piezo resonator.

However, due to a number of issues including power consumption, size, packaging limitations, such prior USB devices appear problematic to implement.

In addition, a quartz crystal or a piezo resonator is very hard to connect to an integrated circuit inside a token having the IC card form factor, i.e. inside a required card thickness of less than 850 microns.

Other devices have been proposed which do not require a quartz crystal of a piezo resonator.

Leydier et al disclose in US 6 343 364 the use of USB downstream signals for recovering the clock from the signals D+ and D- sent by a host or a hub in the context of a USB IC card.

Leydier proposes to this end a calibration module which is separate from the microprocessor of the card and which performs comparison of the downstream signal with the pace of the oscillator.

A synchronization module is also provided for processing the data provided by the microprocessor and for synchronizing such data on the basis of the calibrated oscillator frequency before sending them on the USB port as an upstream data.

For synchronizing the oscillator, a counter is used to determine a number of periods of free-running oscillator contained within a known number of bit periods of the downstream signal. The counted number is divided by the number of bit periods of the downstream signal. This way the local clock signal is phase-locked with the received bit serial signal on an ongoing manner.

There however remains a need for a more reliable and low cost internal clock in a portable token.

This need is addressed in the present invention, by means of the invention which is recited in the appended claims.

Objects, advantages, additional aspects and other forms of the invention will become apparent upon reading the following detailed description and upon reference to the accompanying drawings.

Figure 1 illustrates a USB device according to a preferred embodiment of the invention.

Figure 2 illustrates signals which are exchanged between such device according to the invention and an associated USB host.

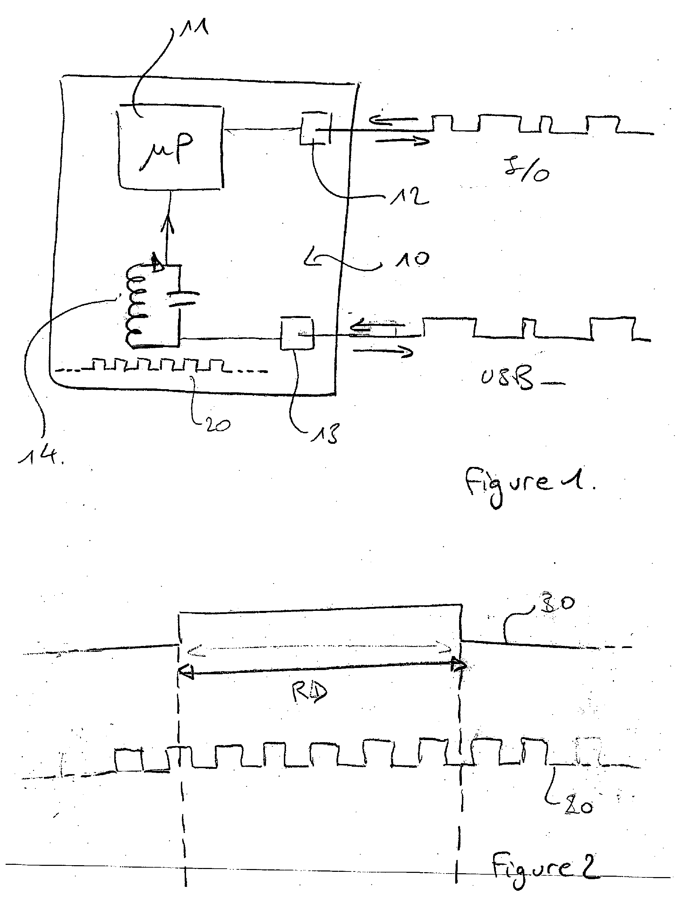

A chip 10 of a IC card is represented on figure 1.

Chip 10 is enabled for USB communication.

Usual components of such USB enabled chips are explained in detail in US 6 343 264 or in US 2004/0148539 for example.

Chip 10 mainly comprises a microprocessor 11 whose role is to process the usual functions of a IC card, typically encryption/decryption, check of passwords and authenticity of received data, and manage restricted access to some protected memory areas of the chip.

Microprocessor 10 is connected to an input/output port 12, which port 12 comes into contact with a corresponding input/ouput port of a reader for exchange of usual ISO 7816 signals with said reader.

ISO 7816 is the international standard relating to integrated circuit cards. ISO 7816 specifies in particular the shape, durations, and more generally the protocol as to signals exchanged between chip 10 with a ISO 7816 reader.

According to ISO 7816, port 12 typically supports a dual way communication between the card and the reader. Said ISO 7816 signals are asynchronous, i.e. non submitted to any previous agreement with the reader as to pace or durations for communication. Thus no clock is necessary inside chip 10 for communication under 7816 standard as itself.

Chip 10 is able to communicate on a dedicated port 13 under USB protocol. USB protocol is a synchronous protocol which requires an organization in time of the emitting and receiving actions on both sides of the reader and the card.

To be synchronized together, both the reader and the card need a respective clock and the clocks of the reader and the IC card must be on a same level of accuracy.

The clock of the reader is not represented. It is typically a quartz crystal or resonator type clock, which constitutes a reliable clock with low drift even on a long duration scale.

The clock of the IC card 10 is in a present case a microelectronic oscillator 14 based on semi-conductor arrangement. Oscillator 14 is symbolized on figure 1 through usual microelectronic illustration comprising an inductor, a diode and a condenser on a loop circuit. In practice such oscillator is constituted of semiconductor layers as well known in the field of IC cards hardware.

A typical periodical signal 20 generated by oscillator 14 is depicted on figure 1 under reference 20.

Oscillator 14 is associated with port 13 so as to constitute the clock which paces the USB communication in the card.

Oscillator 14 has no permanent link with a stable clock such as those based on quartz or resonator components.

Oscillator generates oscillations with periods relying only on the physical electric abilities of its constituting semiconductor layers, said semi-conductor layers being known as unsufficient for providing a reliable stability of periods throughout a long scale of time. Oscillator 14 therefore requires to be repetitively set to a predetermined period duration for being considered as a clock.

We will now describe the manner in which oscillator 14 is set according to a preferred aspect of the invention.

As a first step for calibration, a reference signal 30 is received by microprocessor 11. Such reference signal 30 is represented on figure 2. Reference signal 30 presents a recognizable shape for the microprocessor, here a square block shape. Microprocessor recognizes a beginning point and an ending point of such square block shape of the reference signal 30.

Such recognizable square block shape of signal 30 has a predetermined duration RD which has been externally established by use of a reliable clock such as a quartz or piezo-resonator clock.

Reference signal 30 is advantageously received on the Input/Output port 12 of microprocessor 11.

Microprocessor 11 compares such reference signal 30 with the periodical signal 20 generated by oscillator 14. As a result of the comparison, microprocessor 11 counts a number of periods occurred in periodical signal 20 during the reference duration RD indicated by reference signal 30.

Depending on the counted number of periods, microprocessor 11 deduces the value of a correction which has to be applied to oscillator 14 so as to tune the duration of the period of it.

For example, microprocessor 11 expects an optimal number of 10 periods inside a 1 microsecond reference duration RD. When the counted number of periods is 12, microprocessor 11 deduces that the duration of the periods must be enlarged by two tenth of 1 microseconds, i.e. by 0.2 microseconds.

Microprocessor 11 is advantageously able to identify a case when oscillator is already tuned i.e. when the counted number of oscillations corresponds to the expected number inside a tolerated frame of adequacy.

Tuning of oscillator 14 may then be performed only if a calibration appears to be necessary. Tuning of oscillator 14 may be performed as itself either by microprocessor 11 or by an external device on the basis of number of oscillations as counted by microprocessor 11.

So as to be tunable, oscillator 14 includes at least one microelectronic component which reacts physically to an applied electrical level onto such component. Such electrical level applied to the tunable component of oscillator 14 thereby influences the oscillating period duration of oscillator 14.

Such tuning electrical level is generated by microprocessor 11.

Once tuned to the proper period duration, oscillator 14 is used by the card for pacing inputs and outputs of communication data on the card side on the USB port 13.

Such communication pacing role of oscillator 14 is well-known as itself, and consists in sending the output data as well as picking up the input data according to predetermined time frames in a synchronized manner with the external reader.

Oscillator 14 fulfills an addition role which consists in being the pacing oscillator for the internal processing work of microprocessor 11.

As the usual microprocessors on the market, microprocessor 11 requires an oscillator for providing regular impulses which trigger the successive changes of electric states of the microprocessor. At each period of pacing oscillator 14, microprocessor 11 is enabled to change state and thereby for example launch a new processing task or launch a new storing action of a data in an associated memory.

In the present embodiment, oscillator 14 therefore fulfills two functions, i.e. the function of a pacing oscillator for internal processing work of microprocessor 11 and the function of a pacing oscillator for USB communications with an external USB device.

Many benefits arise from the oscillator fulfilling those two roles.

As a first benefit, such oscillator 14 enhances communication efficiency of the card. Indeed, microprocessor 11 becomes internally paced in accordance with the pace of the USB exchanges.

Traditional processing of data which used to be necessary in the prior art cards for pacing a data transfer on port 13 are rendered easier by the fact that the microprocessor works at synchronized pace with the entering and outing USB data of the card.

Heavy pacing tasks are no more necessary to interface between processor 11 and port 13. Those pacing tasks were carried out by an additional pacing module which stopped and launched the data on the basis of the pace of the oscillator.

Such pacing treatment between microprocessor 11 and USB port 13 is rendered easier as far as the data which are output and accepted by microprocessor 11 are at the same pace as those transferred through port 13.

In a preferred embodiment, such pacing treatment external to the microprocessor may then be fully suppressed by the fact that microprocessor 11 may be rendered fully synchronized with USB communication on port 13.

The previously described association between microprocessor 11 and oscillator 14 also provides a benefit as to accuracy and reliability of the obtained synchronization. Oscillator 14, as pacing element of the microprocessor internal processing, appears to be a far more robust to drifts and more generally to time inadequacies than the known oscillators pacing only the USB communications.

Another advantage of the present arrangement lies in the fact that calibration of oscillator 14 is rendered easier by use of the microprocessor.

Indeed, in a preferred embodiment, microprocessor 11 compares the number of oscillations of oscillator 14 with the predetermined duration RD by simply counting a number of its own number of processor instructions executed during said predetermined duration. As the number of executed processor instructions is directly correlated to the number of oscillations or more generally to the pace of the pacing element constituted here by the oscillator, such comparison allows microprocessor 11 to perform such indirect comparison between the pace of the pacing element and the predetermined duration RD.

In addition, present oscillator 14 as associated with microprocessor 11 appears to be far more easy to implement in a card than a calibration module separate to the microprocessor.

Although calibration has been described as performed by microprocessor 11, oscillator 14 may be tuned by an external device. In such a case, the microprocessor may count the number of oscillations during a given duration RD as indicated by reference signal 30, but the counted number of oscillations may be returned to said external device. Said external device then interprets said counted number and provides a tuning signal to the microprocessor or applies a direct tuning action onto oscillator 14.

In the present embodiment, reference signal 30 has been described as received through the ISO 7826 InputlOutput port 12 of microprocessor 11. Receiving reference signal 30 on the Input/Output port 12 allows microprocessor 11 to tune its processing pace before using the USB port.

In an alternate embodiment, reference signal 30 may be received through USB port 13, microprocessor using the USB port in absence of prior synchronization at such calibration step.

Although described in the frame of an integrated circuit smart card with USB communication abilities, the present invention applies to any type of other token including a microprocessor and entitled to timely paced communications. The token will be said to be personal as far as it implies personal rights of the carrier onto it or onto services or accesses associated to it.

Such tokens may be authentication tokens for security applications such as access to services or facilities typically via key challenges, such as SIM cards or contactless entrance cards, and/or tokens which restrict access to their data content for example via passwords or key challenges such as bank cards. Such tokens may also be mass storage tokens such as USB sticks or IC cards comprising flash memory.

## Claims

1. A personal token such as an Integrated Circuit Card, comprising a microprocessor (11), a communication port (13) for data exchanges between the microprocessor and an external device, and an oscillator (14) for pacing exchanges of data through said port between the microprocessor and said external device, **characterized in that** the oscillator pacing the exchanges on said port paces also the internal processing work of the microprocessor (11).

2. A personal token according to claim 1, **characterized in that** said communication port for paced data exchanges is a USB port (13).

3. A personal token according to claim 1, **characterized in that** said communication port for paced data exchanges is a port which requires calibrated clock.

4. A personal token according to claim 1, **characterized in that** the microprocessor performs a comparison between a reference signal (30) presenting a predetermined duration (RD) and a pace of the oscillator (14) during said predetermined duration and generates a comparison result of said comparison.

5. A personal token according to claim 1, **characterized in that** the microprocessor performs a comparison between a reference signal (30) presenting a predetermined duration (RD) and a number of processor instructions executed (20) during said predetermined duration and generates a comparison result of said comparison.

6. A personal token according to claim 1, **characterized in that** the processor performs an action on the oscillator for tuning an oscillating period duration of the oscillator (14).

7. A personal token according to claim 2 or claim 3, **characterized in that** the token comprises an additional communication port (12) for communication between the microprocessor (11) and an external device, **characterized in that** the reference signal is received by the microprocessor through said additional communication port.

8. A personal token according to the preceding claim, **characterized in that** the additional port (12) is a port for ISO 7816 communications.

9. A personal token according to claim 1, **characterized in that** said personal portable token is an Integrated Circuit Card.
